(19) Europäisches Patentamt
European Patent Office
Office européen des brevets

(11) Publication number: 0 167 278
A1

(12) EUROPEAN PATENT APPLICATION

(21) Application number: 85303846.1

(22) Date of filing: 31.05.85

(51) Int. Cl.[4]: H 01 M 6/14
H 01 M 6/16, H 01 M 4/40
//H01M4/38, H01M4/48,
H01M4/58

(30) Priority: 07.06.84 US 618331

(43) Date of publication of application:
08.01.86 Bulletin 86/2

(84) Designated Contracting States:
AT BE CH DE FR GB IT LI LU NL SE

(71) Applicant: AMOCO CORPORATION
200 East Randolph Drive
Chicago Illinois 60601(US)

(72) Inventor: Harkness, Allan C.
1605 150 24th Street
West Vancouver British Columbia V7V 4G8(CA)

(72) Inventor: Prater, Keith Burns
3659 Sykes Road
North Vancouver British Columbia V7K 2A6(CA)

(72) Inventor: Tinker, Lawrence A.
Box 113, 485 Bayview Road
Lions Bay British Columbia VON 2EO(CA)

(74) Representative: Laredo, Jack Joseph et al,
Elkington and Fife High Holborn House 52/54 High
Holborn
London, WC1V 6SH(GB)

(54) **Etched metal electrodes and their use in nonaqueous electrochemical cells.**

(57) Active metal electrodes for use in non-aqueous electrochemical cells are improved by etching with liquid ammonia or amines.



Croydon Printing Company Ltd

# ETCHED METAL ELECTRODES AND THEIR USE IN NONAQUEOUS ELECTROCHEMICAL CELLS

## Background of the Invention

### 1. Field of the Invention.

This invention relates to a method for improving the properties of active metal electrodes for use in non-aqueous electrochemical cells. More particularly, it relates to a process for the modification of conventional active metal electrodes by etching with liquid ammonia or amines.

### 2. Description of the Prior Art.

A substantial amount of interest has recently been centered on the development of ambient temperature, high energy density, electrochemical cells which are light in weight and capable of providing a higher voltage than conventional cells such as nickel-cadmium and lead-acid systems or alkaline cells having zinc anodes. The high energy density cell systems which are currently of interest typically involve the use of active metals (metals above hydrogen in the electromotive series of elements which are unstable in an aqueous environment) as anodes in combination with nonaqueous electrolytes. As used herein, "nonaqueous" is intended to mean substantially free of water.

In conventional electrochemical cells, cathode depolarizers are used in a form which will permit an intimate and maximum contact with an external electrical circuit, such as a set of wires connecting the electrodes of a cell, while also effecting a physical separation of the cathode depolarizer from the anode. In such cells, the cathode depolarizer is generally an insoluble, finely divided solid which is either admixed with or used as a

coating over an inert conducting material, such as nickel, graphite or carbon rod, which serves as a current collector or cathode. The physical separation of the cathode depolarizer from the anode is necessary to prevent a direct chemical reaction between the anode material and the cathode depolarizer which would result in self-discharge of the cell.

Until recently, it was generally believed that a direct physical contact between the cathode depolarizer and the anode could not be permitted within an electrochemical cell. It has been discovered, however, that certain cathode depolarizers do not react chemically to any appreciable extent with active metal anodes at the interface between the anode and the cathode depolarizer. Accordingly, with materials of this type, it is possible to construct an electrochemical cell wherein an active metal anode is in direct contact with the cathode depolarizer. For example, U.S. Patent No. 3,567,515 issued to Maricle et al. on March 2, 1971, discloses the use of sulfur dioxide as a cathode depolarizer in such a cell. Similarly, U.S. Patent No. 3,926,669 issued to Auborn on Dec. 16, 1975, discloses that certain liquid inorganic oxyhalides and thiohalides, such as thionyl chloride, sulfuryl chloride and phosphorus oxychloride, can be utilized as cathode depolarizers in such a cell.

Consistent with the disclosure of Maricle et al. in the above-mentioned U.S. Patent No. 3,567,515, ultra-pure lithium electrodes prepared by vapor deposition of lithium on a glass substrate are stable when placed in direct contact with an electrolyte which comprises sulfur dioxide and in which the dithionite discharge product is soluble. However, we have also found that a relatively rapid self-discharge usually occurs when the lithium electrode is fabricated from bulk samples of commercially supplied lithium. For example, when commercial lithium foil is placed in an electrolyte which comprises sulfur dioxide and in which the dithionite discharge product is

soluble (dithionite anion is the sulfur dioxide reduction product), one usually observes one or more spots appearing on the lithium surface from which a red to black colored material is released. In some cases, only a few such spots will appear. More typically, however, large areas of the lithium electrode will be covered with such spots. When the lithium electrode is coupled with a carbon cathode, the open circuit voltage of the resulting electrochemical cell decays rapidly as a consequence of the self-discharge process. This self-discharge represents a major obstacle to the construction of a satisfactory electrochemical cell which comprises an active metal anode, a sulfur dioxide cathode depolarizer, and an electrolyte solution in which the dithionite discharge product is soluble. The prior art fails to disclose any method for either the control or prevention of this self-discharge.

High surface area active metal electrodes are highly desirable for use in high energy density cell systems for a variety of reasons. For example, high surface area electrodes provide higher currents and, accordingly, permit the delivery of greater power from both primary (nonrechargeable) and secondary (rechargeable) cells during discharge. In those cases wherein an insoluble product is produced during discharge and deposited on the active metal electrode, high surface area electrodes provide a greater discharge capacity before the active surface becomes coated. Further, high surface area electrodes are generally porous in nature. In rechargeable secondary cells, this porous nature permits the retention of any insoluble discharge product within the pores and thus facilitates the recharge process. This retention of discharge product near the electrode in secondary cells serves to reduce electrode shape change during recharge, thereby extending cycle life.

The alkali metals and, to a lesser degree, calcium, strontium, barium, europium and ytterbium are soluble in

liquid ammonia. The resulting solutions are blue in color when dilute and are bronze or metallic appearing at metal concentrations of about 3 molar or above. In the dilute solutions, it is generally believed that the metal is dissociated into solvated metal ions and electrons. The more concentrated bronze appearing solutions possess physical properties, such as a metallic luster and an exceedingly high electrical conductivity, which resemble those of liquid metals. The foregoing metals are also soluble, to varying degrees, in amines. In addition, it is known that lithium, sodium and potassium are soluble in hexamethylphosphoramide, a compound which has the formula $[(CH_3)_2N]_3PO$.

A procedure for the preparation of alkali metal and alkaline earth metal dispersions in hydrocarbon liquids has been developed which is based on the solubility of these metals in liquid ammonia. This procedure involves dispersing an ammonia solution of the metal in a hydrocarbon liquid and allowing the ammonia to evaporate. Similarly, C. M. Stupak disclosed at the Colloque Weyl (June 26-July 1, 1983, at Pacific Grove, California) that lithium can be purified by filtering a saturated ammonia solution of this metal and recovering the metal by evaporation of the ammonia.

Various alcohols, typically in combination with an inert hydrocarbon diluent, have been utilized to chemically polish and etch alkali metals. A survey of the use of various alcohols to polish lithium, sodium and potassium has been reported by R. N. Castellano et al., J. Electrochem. Soc.: Solid State Science, 118, 653 (1971).

## Summary of the Invention

The present invention is directed to the discovery that the properties of certain active metal electrodes for use in electrochemical cells can be improved by etching these electrodes with liquid ammonia or certain

liquid amines. More specifically, it has been discovered that the surface area of an electrode which is comprised of a metal selected from the group consisting of lithium, sodium, potassium, calcium, strontium and barium can be increased by contact with liquid ammonia or certain liquid amines. In addition, it has also been found that such contacting with liquid ammonia or certain liquid amines also serves to prevent or control the self-discharge of the electrode when it is placed in contact with a cathode depolarizer with which it should be compatible.

One embodiment of the invention is an electrochemical cell comprising in combination: (a) a cathode; (b) a cathode depolarizer; (c) a nonaqueous, conductive electrolyte; and (d) a solid electrode comprising at least one metal selected from the group consisting of lithium, sodium, potassium, calcium, strontium and barium, said electrode having a surface which has been modified by contact with a liquid etching agent comprising at least one material selected from the group consisting of ammonia and amines which are capable of dissolving said metal, wherein said contact with the etching agent is effective to remove at least some metal from the electrode surface.

Another embodiment of the invention is an electrochemical cell comprising in combination: (a) a cathode; (b) a nonaqueous, conductive, liquid electrolyte which comprises sulfur dioxide; and (c) a solid electrode comprising lithium, said electrode having a surface which has been modified by contact with liquid ammonia, wherein said contact with the etching agent is effective to remove at least some metal from the electrode surface.

An object of the invention is to provide an improved electrochemical cell.

Another object of this invention is to provide an improved active metal electrode for use in nonaqueous electrochemical cells.

Another object of this invention is to provide an active metal electrode having an increased surface area.

A further object of this invention is to provide an active metal electrode which has a reduced tendency to self-discharge when combined with a cathode depolarizer with which it should be compatible.

## Detailed Description of the Invention

We have found that certain active metal electrodes for use in nonaqueous electrochemical cells can be improved by etching with certain nitrogen-containing etching agents. Suitable active metal electrodes for use in the practice of this invention comprise at least one metal selected from the group consisting of lithium, sodium, potassium, calcium, strontium and barium. All of these metals are characterized by at least some solubility in the etching agent of this invention. In view of this solubility, the etching agent has the ability to modify the electrode surface by dissolving surface layers of the metal. Lithium and sodium are preferred metals for use as active metal electrodes in view of their high electrode potential, low equivalent weight and high solubility in the etching agent. Lithium is highly preferred since it has the ability in an electrochemical cell to provide the highest performance in watt-hours per pound of all known active metals.

The etching agent of this invention is a liquid, nitrogen-containing material which comprises at least one compound selected from the group consisting of ammonia and amines which are capable of dissolving the metal from which the active metal electrode is constructed. For the purposes of this application, the term "amines" includes diamines and polyamines. Suitable amines for use as the etching agent include, but are not limited to, amines of the formula:

$$R^1 - \overset{\displaystyle R^2}{\overset{|}{N}} - R^3$$

wherein $R^1$ is a hydrocarbyl group of from 1 to 10 carbon atoms and $R^2$ and $R^3$ are independently selected from the group consisting of hydrogen and hydrocarbyl groups of from 1 to 10 carbon atoms. Preferred amines are generally of the above formula wherein $R^1$ is an alkyl group of from 1 to 5 carbon atoms and $R^2$ and $R^3$ are independently selected from the group consisting of hydrogen and alkyl groups of from 1 to 5 carbon atoms. Suitable amines include, for example, trimethylamine, triethylamine, diethylamine, dimethylamine, n-butylamine, ethylamine and ethylenediamine.

Ammonia is the preferred etching agent for use in the practice of this invention in view of its unusual ability to dissolve the active metals of this invention, its low cost, availability and volatility. It will be appreciated, of course, that the high volatility of liquid ammonia is of significance since residual ammonia can be removed from an active metal electrode after treatment with it by the simple expedient of permitting this residual ammonia to evaporate.

If desired, a substantially inert liquid diluent can be utilized in combination with the etching agent. This diluent must, of course, be substantially inert with respect to both the active metal electrode and the etching agent. In addition, the diluent should be miscible with the etching agent. Suitable diluents include, but are not limited to, ethers such as tetrahydrofuran, diethyl ether and ethylene glycol dimethyl ether. Ordinarily, however, it is preferred to utilize the etching agent without any diluent since the diluent usually has the undesirable effect of reducing the solubility of the active metal of the electrode.

In the practice of this invention, the active metal electrode is contacted with an amount of the etching agent for a period of time and at a temperature which are effective to result in a modification of the surface of the electrode. This contacting serves to remove at least some metal, and preferably a minor amount of metal, from the electrode surface as a consequence of the metal dissolving in the etching agent. When liquid ammonia is utilized, the contacting will, typically, be carried out at or below a temperature of about -33°C, the boiling point of ammonia at a pressure of one atmosphere. However, ammonia can be utilized at higher contacting temperatures either through the use of higher pressures or by the use of a higher boiling diluent. A preferred method of contacting the active metal electrode with the etching agent involves a simple dipping of the electrode in the etching agent.

After modification of the electrode surface by the etching agent, the electrode is removed from contact with the etching agent. Residual traces of the etching agent can be removed from the electrode after such contacting by conventional techniques, such as evaporation or washing with a substantially inert solvent. Suitable solvents for this purpose include, but are not limited to ethers, such as tetrahydrofuran, diethyl ether and ethylene glycol dimethyl ether. Techniques which involve wiping the electrode surface are not generally preferred because of the possibility that impurities may become attached to the electrode surface. Removal of residual traces of etching agent by evaporation is highly preferred for volatile etching agents such as ammonia since it is believed that this method serves to enhance the electrode surface area through the formation of a porous layer of active metal on the electrode surface.

Although the subject invention is not to be so limited, it is believed that commercially supplied bulk samples of active metals carry significant amounts of

surface impurities. In addition, the fabrication of these metals into electrodes for use in electrochemical cells carries with it the probability that additional impurities will be attached to the surface of the resulting electrode. For example, mere contact with a cutting tool can serve to contaminate the electrode surface. When an active metal electrode is utilized in an electrochemical cell wherein it is in direct contact with a cathode depolarizer, particulate surface impurities can act as small cathodes which are in direct electrical contact with the active metal electrode. As a consequence, self-discharge can take place. The etching agent of this invention is believed to control this self-discharge process by dissolving a surface layer of metal from the electrode and thereby removing any adhering contaminants or impurities.

The treatment of lithium electrodes with liquid ammonia in accordance with this invention serves to substantially prevent the self-discharge of about 80% of the treated electrodes when they are placed in an electrolyte which comprises sulfur dioxide and in which the dithionite discharge product is soluble. In addition, the extent of self-discharge in the remaining 20% of such treated electrodes is substantially reduced in comparison with untreated lithium electrodes. The treatment of lithium electrodes with amines produces a similar result.

In addition to controlling or preventing electrode self-discharge, treatment of an active metal electrode with an etching agent in accordance with this invention has the additional beneficial effect of enhancing the surface area of the treated electrode. The electrode surface is pitted by contact with the etching agent, thereby resulting in a roughened surface which has an increased surface area. It is also believed that some of the metal which is initially dissolved from the electrode surface can be redeposited in the form of a porous metal sponge if residual traces of the etching agent are

removed by evaporation upon completion of the etching.

The active metal electrode of the electrochemical cell of this invention can be constructed in any of the conventional forms, such as foil, plates, rods, films, powders, compacts or screens, and can be used alone or in combination with either conducting or nonconducting substrates. However, the use of a conducting substrate is not usually preferred in those situations where a simultaneous contact of both substrate and active metal with an electrolyte can cause self-discharge of the electrode.

The cathode of the electrochemical cell can be constructed of any material which is electrically conducting and is substantially inert to the electrolyte system. In addition, the cathode material is desirably catalytic with respect to electroreduction of the cathode depolarizer. Preferred materials include metals of the platinum group family, consisting of platinum, iridium, osmium, palladium, rhodium and ruthenium; carbon in any of its common electrode forms such as sintered, compacted or powdered graphite or carbon rod; iron in its various forms, particularly as stainless steel; titanium, nickel, silver, mercury, lead and gold. Less preferred materials are metals of the families of vanadium, chromium and manganese [Groups 5b, 6b and 7b of the Periodic Table of Elements (Handbook of Chemistry and Physics, 57th ed., 1976-77, P. B-4)]; zirconium, cobalt, copper, zinc, cadmium, germanium, tin, antimony and bismuth; certain nitrides such as boron nitride; and semi-conductors such as silicon. These materials can be used in any of the forms which are conventional in the art, such as rods, compacts, powders, pastes and the like.

The electrochemical cell of this invention comprises a cathode depolarizer which is electrochemically reduced at the surface of the cathode during discharge of the electrochemical cell. Preferred cathode depolarizers include all materials which are stable when in direct contact with the active metal anode and are also capable

of being electrochemically reduced at the cathode during discharge of the electrochemical cell. These preferred cathode depolarizers are typically used as a component of the electrolyte. Suitable cathode depolarizers include, but are not limited to, sulfur dioxide and covalent inorganic oxyhalides and thiohalides. Examples of such oxyhalides and thiohalides include phosphorus oxychloride, monofluorophosphoryl dichloride, monobromophosphoryl dichloride, phosphorus oxybromide, thiophosphoryl chloride, thiophosphoryl bromide, thionyl chloride, thionyl bromide, sulfuryl chloride, selenium oxychloride and mixtures thereof. Preferred cathode depolarizers include sulfur dioxide, thionyl chloride, sulfuryl chloride and phosphorus oxychloride.

In the absence of any surface contamination on the active metal electrode which can initiate self-discharge, the cathode depolarizer is stable when in contact with this electrode. Although the reasons for this are not well understood, it is believed that the active metal electrode reacts with a small amount of the cathode depolarizer to form a thin film of the reaction product on the electrode surface which serves to prevent any further molecules of cathode depolarizer from reaching the active metal of the electrode. For example, in the case of a lithium anode and sulfur dioxide as the cathode depolarizer, it is believed that the anode is passivated by the formation of a thin film of lithium dithionite ($Li_2S_2O_4$) which then prevents further sulfur dioxide molecules from reaching the lithium anode surface and thereby prevents self-discharge. Nevertheless, this thin film permits electrochemical oxidation and reduction of the lithium anode to take place during operation of the cell by passage of lithium cations through the film. At the same time, sulfur dioxide reduction products are formed at the cathode during discharge of the cell.

Suitable electrolytes for use in the electrochemical cell of this invention can be of any conventional type and in any conventional form, for example, liquid, paste or solid. Preferably, the electrolyte comprises a liquid cathode depolarizer having dissolved therein at least one, and ordinarily more than one, electrolyte salt which is substantially inert to the other cell components. Such salts are selected and utilized in amounts which are effective to provide an adequate conductivity for efficient operation of the electrochemical cell. Suitable electrolyte salts include, but are not limited to, alkali metal salts, alkaline earth metal salts, salts derived from metal cation complexes, quaternary ammonium salts, phosphonium salts, pyridinium salts and arsonium salts.

Electrolyte salts having lithium cations and large anions which are stable to oxidation and reduction are particularly useful. Examples of such materials include lithium perchlorate, lithium dithionite, lithium sulfate, lithium tetrafluoroborate, lithium hexafluorophosphate, lithium bromide and lithium chloride.

Salts derived from metal cation complexes which are suitable for use as electrolyte salts preferably contain at least one anion selected from the group consisting of perchlorate, tetrafluoroborate, hexafluorophosphate, dithionite, sulfate, phosphate, chloride, bromide and fluoride. Preferred metal cation complexes are metal cations which are associated with one or more organic ligands or chelating agents. It will be appreciated, of course, that such coordinated or chelated metal cations should be free of acidic hydrogen atoms. Examples of suitable metal cation complexes include, but are not limited to, complexes of an alkali metal cation with a crown ether, such as $Na(15\text{-crown-}5)^+$ complexes of an alkali metal cation with a cryptand, such as $K(C_{18}H_{36}N_2O_6)^+$, $[Co(8\text{-hydroxyquinoline})_2(NH_3)_2]^+$, $[Co(8\text{-hydroxyquinoline})_2(2,2'\text{-dipyridyl})]^+$, $Mn(2,2'\text{-dipyridyl})_3^{++}$, and

$Mn(1,10\text{-phenanthroline})_3^{++}$. Of these examples, $Mn(2,2'\text{-dipyridyl})_3^{++}$ and $Mn(1,10\text{-phenanthroline})_3^{++}$ are particularly preferred.

Quaternary ammonium salts are highly suitable for use as electrolyte salts in the practice of this invention. Preferred quaternary ammonium salts are of the formula:

$$\begin{array}{ccccc} & & R^2 & & \\ & & | & & \\ R^1 & - & N^+ & - & R^3 \\ & & | & & \\ & & R^4 & & \end{array} \qquad X^-$$

wherein $R^1$, $R^2$, $R^3$ and $R^4$ are independently selected from the group consisting of hydrocarbyl groups containing from 1 to 20 carbon atoms, and $X^-$ is selected from the group consisting of perchlorate, tetrafluoroborate, hexafluorophosphate, dithionite, sulfate, phosphate, chloride, bromide, iodide and fluoride. More preferably, $R^1$, $R^2$, $R^3$ and $R^4$ are independently selected from the group consisting of alkyl groups having from 1 to 10 carbon atoms, and $X^-$ is selected from the group consisting of perchlorate, tetrafluoroborate, hexafluorophosphate, dithionite, sulfate and bromide. Examples of suitable quaternary ammonium salts include tetrabutylammonium perchlorate, tetrahexylammonium perchlorate, tetramethylammonium tetrafluoroborate, and tetrapropylammonium hexafluorophosphate.

Phosphonium salts are highly suitable for use as electrolyte salts in the practice of this invention, and preferred phosphonium salts are of the formula:

$$\begin{array}{ccccc} & & R^2 & & \\ & & | & & \\ R^1 & - & P^+ & - & R^3 \\ & & | & & \\ & & R^4 & & \end{array} \qquad X^-$$

wherein $R^1$, $R^2$, $R^3$ and $R^4$ are independently selected from the group consisting of hydrocarbyl groups containing

from 1 to 20 carbon atoms, and $X^-$ is selected from the group consisting of perchlorate, tetrafluoroborate, hexafluorophosphate, dithionite, sulfate, phosphate, chloride, bromide, iodide and fluoride. More preferably, $R^1$, $R^2$, $R^3$ and $R^4$ are independently selected from the group consisting of alkyl groups of from 1 to 10 carbon atoms, and aryl and alkyl-substituted aryl groups of from 6 to 12 carbon atoms; and $X^-$ is selected from the group consisting of perchlorate, tetrafluoroborate, hexafluorophosphate, dithionite, sulfate and bromide. Examples of suitable phosphonium salts include tetrabutylphosphonium tetrafluoroborate, tetraphenylphosphonium perchlorate, and tetraphenylphosphonium hexafluorophosphate.

In addition to the cathode depolarizer and electrolyte salt or salts, the electrolyte for use in the electrochemical cell of this invention can additionally comprise one or more liquid organic or inorganic solvents or cosolvents which lack acidic hydrogen atoms and contain one or more atoms having at least one unshared pair of electrons. For the purposes hereof, "acidic hydrogen atoms" are those which are capable of being abstracted by the active metal electrode. However, strongly basic cosolvents such as amines are not generally desirable.

More specifically, suitable solvents and cosolvents are organic or inorganic liquids which contain at least one element which is selected from Groups 3a, 4a, 5a and 6a of the Periodic Table [Handbook of Chemistry and Physics, 57th ed. (1976-77), p. B-4]. Preferred elements from this group include, for example, boron, silicon, nitrogen, phosphorus, oxygen and sulfur as well as combinations of these elements. Organic solvents which contain two or more atoms of such elements in each molecule are particularly suitable.

Preferred liquid organic compounds for use as a solvent or cosolvent in the practice of this invention include, but are not limited to, trialkyl borates,

boronic acid esters, borinic acid esters, tetraalkyl silicates, alkylalkoxyl silanes, nitroalkanes, alkylnitriles, dialkyl amides, lactams, tetraalkyl ureas, acetals, ketals, monocarboxylic acid esters, orthoesters, lactones, dialkyl carbonates, alkylene carbonates, orthocarbonates, monoethers, polyethers, monocarboxylic acid anhydrides, dialkyl sulfates, dialkyl sulfites, alkylene sulfites, and sulfones. Specific examples include triethyl borate, diethyl methylboronate, methyl diethylborinate, tetramethyl silicate, trimethoxymethylsilane, nitroethane, acetonitrile, dimethylformamide, 1-methyl-2-pyrrolidinone, tetramethyl urea, 1,1-diethoxy ethane, 2,2-dimethyoxypropane, ethyl acetate, trimethyl orthoformate, γ-butyrolactone, dimethyl carbonate, ethylene carbonate, tetramethyl orthocarbonate, diethyl ether, tetrahydrofuran, ethylene glycol dimethyl ether, acetic anhydride, dimethyl sulfate, dimethyl sulfite, ethylene sulfite, and tetramethylene sulfone.

The following examples are intended only to illustrate the invention and are not to be construed as imposing limitations on it.

## EXAMPLE I

Four strips of lithium foil (Foote Mineral Co.) each having a width of 1.5 cm and a thickness of 0.5 mm were dipped in 10.2 grams of liquid ammonia for a period of 90 seconds at a temperature of -78°C and in an argon atmosphere. After removal from the liquid ammonia, the lithium strips were maintained at a temperature of about -78°C while residual traces of ammonia were removed by evaporation at reduced pressure (all subsequent handling of the etched strips was carried out in dry room wherein the relative humidity was maintained below 1%). The resulting etched foil was silver in color and lustrous in appearance. When examined with the assistance of either an optical or electron microscope, the etched foil had

the appearance of Swiss cheese, whereas, in comparison, the unetched foil had an essentially flat surface at the same level of magnification. The optical microscope also revealed that the etched lithium surface was dotted with deposits of lithium sponge which, in turn, were dotted with black specks of what is believed to be lithium nitride.

## EXAMPLE II

One of the ammonia etched lithium strips from Example I had an etched area at one end which was 1.0 cm in length. A nickel tab was attached to the unetched end of this strip, and the resulting structure was dipped in hot wax to mask all but a 0.8 cm length of the lithium strip at the etched end. The structure was then utilized as an anode in an electrochemical cell which contained a micro-porous polypropylene (Celgard) covered, porous carbon cathode and an electrolyte which consisted of a sulfur dioxide solution which was 0.2 molar in tetrabutylammonium perchlorate and saturated (0.035 molar) in lithium perchlorate. The open circuit voltage (OCV) of the cell immediately after introducing the electrolyte was 2.97 volts. After standing for a period of 30 minutes, the cell's OCV had increased to 3.06 volts. Two tiny areas of self-discharge were observed on the ammonia etched lithium surface of the anode which was exposed to the electrolyte. Each of these self-discharge areas had an area of less than about 4 $mm^2$ and disappeared within a few hours. The ability of the resulting electrochemical cell to function as a rechargeable cell was evaluated by subjecting it to a series of charge/discharge cycles where each cycle consisted of a discharge period followed by a charge period. All cycling was carried out with the cell being recharged at half the discharge rate. Initial cycling was conducted at a discharge current density of 0.83 $mA/cm^2$ between 0 and 0.3% depth of discharge (DOD).

No degradation of the lithium electrode was observed after 82 such cycles. Subsequently, the cell was subjected to 12 cycles between 5 and 16% DOD at a discharge current density of 1 $mA/cm^2$ and 8 cycles between 12 and 23% DOD. This total amount of cycling corresponds to 2.5 turnovers of the electrochemically active lithium. During these cycling experiments, no occurrences of self-discharge were observed from the electrochemically active area of the lithium electrode which had been etched with liquid ammonia.

EXAMPLE III

A strip of lithium having a width of 1.5 cm, a length of about 8 cm and a thickness of 0.25 mm was cut from a roll of foil obtained from Foote Mineral Co. A nickel tab was attached to one end of the strip to serve as an electrical connection, and the resulting structure was then dipped in a cyclohexane solution of ethylenepropylene-diene terpolymer to mask all but a 2.0 cm length at the end of the strip opposite from the nickel tab. The structure was then utilized as an anode in an electrochemical cell which contained a micro-porous polypropylene (Celgard) covered, porous carbon cathode and an electrolyte which consisted of a sulfur dioxide solution which was 0.2 molar in tetrabutylammonium perchlorate and saturated (0.035 molar) in lithium perchlorate. The open circuit voltage (OCV) of the cell as a function of time and the amount of the lithium anode surface area which was subject to self-discharge are set forth in the following tabulation:

| Time, hr. | OCV, volts | Anode Surface Area Subject to Self-Discharge, %[a] |
|---|---|---|
| 0 | 2.886 | 3 |
| 1.5 | 2.948 | 15 |
| 3.5 | 2.963 | 30 |
| 21.5 | 1.292 | 55 |
| 42.5 | 1.84 | 55 |

(a) Self-discharge was indicated by the formation of red areas on the electrode surface with a red material streaming into the electrolyte from these areas.

The above-tabulated results serve to demonstrate the severe self-discharge which is typically observed when the electrolyte of this Example III is combined with commercial lithium foil which has not been etched in accordance with this invention.

EXAMPLE IV

A strip of lithium having a width of 1 cm, a length of 3 cm and a thickness of 0.5 mm was cut from a roll of foil obtained from Foote Mineral Co. The strip was dipped to a depth of about 1 cm in ethylenediamine for a period of 6 minutes at room temperature and under an argon atmosphere. Residual ethylenediamine was then removed by evaporation at reduced pressure overnight. The etched area of the foil was covered by white and blue colored solids. When these solids were scraped off and the underlying surface examined under the optical microscope at 4X, the previously smooth surface was found to be covered by circular and evenly distributed pits.

EXAMPLE V

A strip of lithium foil (Foote Mineral Co.) was dipped in ethylenediamine at room temperature and, subsequently, allowed to "dry" overnight at room temperature and under an argon atmosphere in a dri-box. The resulting etched foil, which had a white surface coating, was utilized as an anode in an electrochemical cell which contained a porous carbon cathode and an electrolyte which consisted of a sulfur dioxide solution which was 0.2 molar in tetrabutylammonium perchlorate and saturated (0.035 molar) in lithium perchlorate. No self-discharge of the lithium anode was observed, and a stable open circuit voltage of 2.95 volts was observed. In addition, the anode was found to have a film resistance of 10,000 ohm $cm^2$.

EXAMPLE VI

A small piece of calcium (obtained from J. T. Baker Chemical Co.) weighing 0.343 gram and having a smooth surface was dipped in liquid ammonia at a temperature of -78°C for about 1 minute. Residual traces of ammonia were then removed by evaporation. About one fourth of the surface of the resulting piece of calcium was pitted. As a consequence of this pitting, the surface area of the calcium was increased.

CLAIMS

1. An electrochemical cell comprising in combination:

(a) a cathode;

(b) a cathode depolarizer;

(c) a nonaqueous, conductive electrolyte; and

(d) a solid electrode comprising at least one metal selected from the group consisting of lithium, sodium, potassium, calcium, strontium and barium, said electrode having a surface which has been modified by contact with a liquid agent comprising at least one material selected from the group consisting of ammonia and amines which are capable of dissolving said metal, wherein said contact with said agent is effective to remove at least some metal from the electrode surface and is performed prior to contacting said electrode with said liquid electrolyte solution.

2. The electrochemical cell as set forth in claim 1 wherein said agent comprises an amine of the formula:

$$R^1 - \underset{|}{\overset{R^2}{N}} - R^3$$

wherein $R^1$ is a hydrocarbyl group of from 1 to 10 carbon atoms and $R^2$ and $R^3$ are independently selected from the group consisting of hydrogen and hydrocarbyl groups of from 1 to 10 carbon atoms.

3. The electrochemical cell as set forth in claim 1 wherein said agent comprises liquid ammonia.

4. The electrochemical cell as set forth in claim 1 wherein said electrode comprises lithium.

5. The electrochemical cell as set forth in claim 1 wherein said electrolyte is a liquid which comprises said cathode depolarizer, and the cathode depolarizer is selected from the group consisting of sulfur dioxide, oxyhalides and thiohalides, wherein said oxyhalides and thiohalides are covalent inorganic compounds.

6. The electrochemical cell as set forth in claim 5 wherein said cathode depolarizer comprises a material selected from the group consisting of sulfur dioxide, thionyl chloride, sulfuryl chloride and phosphorus oxychloride.

7. The electrochemical cell as set forth in claim 5 wherein said cathode depolarizer comprises sulfur dioxide.

8. The electrochemical cell as set forth in claim 5 wherein said electrolyte comprises a liquid cathode depolarizer having at least one electrolyte salt dissolved therein which is substantially inert to said cathode depolarizer and said electrode.

9. The electrochemical cell as set forth in claim 8 wherein said electrolyte salt comprises a quaternary ammonium salt of the formula:

$$R^1 - \overset{\overset{R^2}{|}}{\underset{\underset{R^4}{|}}{N^+}} - R^3 \qquad X^-$$

wherein $R^1$, $R^2$, $R^3$ and $R^4$ are independently selected from the group consisting of hydrocarbyl groups of from 1 to 20 carbon atoms, and $X^-$ is selected from the group consisting of perchlorate, tetrafluoroborate, hexafluorophosphate, dithionite, sulfate, phosphate, chloride, bromide, iodide and fluoride.

10. The electrochemical cell as set forth in claim 8 wherein said electrolyte salt comprises a lithium salt selected from the group consisting of lithium perchlorate, lithium dithionite, lithium sulfate, lithium tetrafluoroborate, lithium hexafluorophosphate, lithium bromide and lithium chloride.

11. The electrochemical cell as set forth in claim 8 wherein at least two electrolyte salts are dissolved in said cathode depolarizer and wherein one of said electrolyte salts is a lithium salt and the second is a quaternary ammonium salt.

12. The electrochemical cell as set forth in claim 8 wherein said electrolyte additionally comprises an organic liquid cosolvent for said electrolyte salt, wherein said cosolvent is substantially inert to said cathode depolarizer and said electrode.

13. The electrochemical cell as set forth in claim 1 wherein said cathode comprises carbon.

14. The electrochemical cell as set forth in claim 1 wherein said contact with said agent is effective to remove a minor amount of metal from the electrode surface.

15. The electrochemical cell as set forth in claim 1 wherein said agent additionally comprises a substantially inert diluent.

16. An electrochemical cell comprising in combination:

(a) a cathode;

(b) a nonaqueous, conductive, liquid electrolyte which comprises sulfur dioxide; and

(c) a solid electrode comprising lithium, said electrode having a surface which has been modified by contact with liquid ammonia wherein said contact with liquid ammonia is effective to remove at least some metal from the electrode surface and is performed prior to contacting said electrode with said liquid electrolyte solution.

17. The electrochemical cell as set forth in claim 16 wherein said electrolyte comprises liquid sulfur dioxide having at least one electrolyte salt dissolved therein which is substantially inert to said sulfur dioxide and said electrode.

18. The electrochemical cell as set forth in claim 17 wherein said electrolyte salt comprises a material selected from the group consisting of lithium salts and quaternary ammonium salts.

19. The electrochemical cell as set forth in claim 17 wherein at least two electrolyte salts are dissolved in said sulfur dioxide and wherein one of said electrolyte salts is a lithium salt and the second is a quaternary ammonium salt.

20. The electrochemical cell as set forth in claim 17 wherein said cathode comprises carbon.

European Patent Office

**0167278**

Application number

# EUROPEAN SEARCH REPORT

EP 85303846.1

| Category | DOCUMENTS CONSIDERED TO BE RELEVANT<br>Citation of document with indication, where appropriate, of relevant passages | Relevant to claim | CLASSIFICATION OF THE APPLICATION (Int. Cl 4) |
|---|---|---|---|
| A | US - A - 4 366 616 (CATANZARITE)<br>* Column 1, line 17 - column 2, line 48; especially column 2, lines 40-42 *<br>-- | 1,4-8, 16,17 | H 01 M 6/14<br>H 01 M 6/16<br>H 01 M 4/40<br>//H 01 M 4/38<br>H 01 M 4/48<br>H 01 M 4/58 |
| D,A | US - A - 3 926 669 (AUBORN)<br>* Claims *<br>-- | 1,4-6, 8,10 | |
| D,A | US - A - 3 567 515 (MARICLE et al.)<br>* Claims; column 4, line 68 - column 5, line 56 *<br>-- | 1,4,5, 7-13, 15-20 | |
| D,A | JOURNAL OF THE ELECTROCHEMICAL SOCIETY: SOLIDE STATE SCIENCE, vol. 118, April 1971, Princeton, New Jersey<br>R.N. CASTELLANO et al. "Chemical Polish and Etch for Lithium, Sodium and Potassium"<br>pages 653, 654<br>---- | 1 | TECHNICAL FIELDS SEARCHED (Int. Cl 4)<br>H 01 M |

The present search report has been drawn up for all claims

| Place of search | Date of completion of the search | Examiner |
|---|---|---|
| VIENNA | 12-09-1985 | LUX |

CATEGORY OF CITED DOCUMENTS

X particularly relevant if taken alone
Y particularly relevant if combined with another document of the same category
A technological background
O non-written disclosure
P intermediate document

T : theory or principle underlying the invention
E : earlier patent document, but published on, or after the filing date
D : document cited in the application
L : document cited for other reasons
& : member of the same patent family, corresponding document

EPO Form 1503 03 82